# EUROPÄISCHE PATENTANMELDUNG

(11) **EP 2 256 314 A1**
(43) Veröffentlichungstag der Anmeldung: **01.12.2010**
(21) Anmeldenummer: 09006680.4
(22) Anmeldetag: 18.05.2009
(51) Int. Cl.: F02B 67/10, F02B 39/00, F02F 1/24, F01N 13/10

(54) **Verbrennungsmotor**

(71) Anmelder: BorgWarner, Inc., Auburn Hills, MI 48326-2872 (US)
(72) Erfinder: Christmann, Ralf, Dr., 67657 Kaiserslautern (DE); Sauerstein, Rolf, 67822 Finkenbach (DE)
(74) Vertreter: Hager, Thomas Johannes

(57) **Zusammenfassung**

Die vorliegende Erfindung betrifft einen Verbrennungsmotor (1) mit einem Zylinderkopf (2), der mit einem integrierten Abgaskrümmer (3) versehen ist, mit einem Motorblock (4), auf dem der Zylinderkopf (2) fixierbar ist, der eine Motorblock-Längsseite (5) und eine im Vergleich zur Längsseite (5) kürzere Motorblock-Stirnseite (6) aufweist, und mit einem Abgasturbolader (7), der eine Turbine (8) mit einem Turbinengehäuse (8'), ein Ladergehäuse (9) und einen Verdichter (10) mit einem Verdichtergehäuse (10') aufweist, dadurch gekennzeichnet, dass der Abgasturbolader (7) an der Stirnseite (6) angeordnet ist.

## Beschreibung

Die Erfindung betrifft einen Verbrennungsmotor gemäß dem Oberbegriff des Anspruchs 1.

Ein derartiger Verbrennungsmotor, der als Diesel-Brennkraftmaschine oder fremdgezündete Brennkraftmaschine ausgebildet sein kann, ist aus der DE 11 2006 001 468 T5 bekannt.

Ein weiterer Verbrennungsmotor ist aus der EP 952 329 B1 bekannt, bei dem der Turbolader über ein so genanntes Front-End oben auf dem Motor angeordnet ist.

Es ist Aufgabe der vorliegenden Erfindung, einen Verbrennungsmotor der im Oberbegriff des Anspruchs 1 angegebenen Art zu schaffen, dessen Aufbau kompakt ist und der damit vielseitig einsetzbar ist.

Die Lösung dieser Aufgabe erfolgt durch die Merkmale des Anspruchs 1.

Durch das Anbringen des Abgasturboladers an der Stirnseite des Verbrennungsmotors ist es möglich, den Turbolader luft- und abgasseitig direkt mit integrierten Krümmern des Verbrennungsmotors zu verbinden. Die Luft- und Abgasführung kann hierbei ohne Verwendung von Leitungen stirnseitig erfolgen. Das Verdichtergehäuse wird auf der Frischluftseite des Verbrennungsmotors mit seinem Druckstutzen direkt an den Motor, vorzugsweise ein Modul des Motors, angeflanscht. Hierbei ist es vorzugsweise möglich, sowohl den Ansaugkrümmer wie auch den Abgaskrümmer im Zylinderkopf zu integrieren. Dieses Konzept kann mit besonderem Vorteil bei Motoren mit kleiner Zylinderanzahl (z.B. 3 Zylinder Motoren), aber natürlich auch bei Motoren mit anderen Zylinderzahlen verwendet werden, die sowohl als Dieselmotor oder Ottomotor ausgebildet sein können.

Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1: eine schematisch dargestellte vereinfachte Draufsicht auf eine erste Ausführungsform eines erfindungsgemäßen Verbrennungsmotors,
- Fig. 2: eine der Fig. 1 entsprechende Darstellung einer zweiten Ausführungsform, und
- Fig. 3: eine der Fig. 1 entsprechende Darstellung einer dritten Ausführungsform des erfindungsgemäßen Verbrennungsmotors.

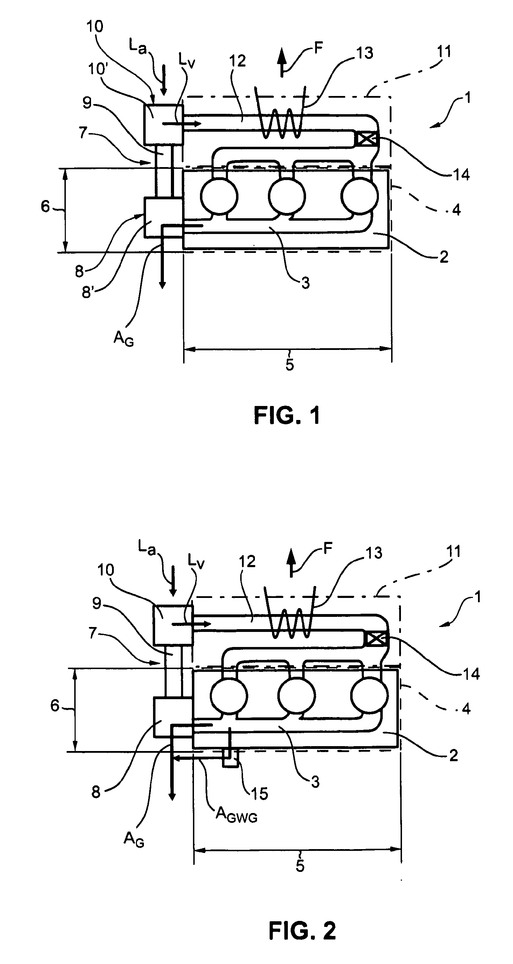

Nachfolgend wird mit Bezug auf Fig. 1 ein erstes Ausführungsbeispiel eines erfindungsgemäßen Verbrennungsmotors 1 detailliert beschrieben. In Fig. 1 ist ein Verbrennungsmotor 1 dargestellt, der in Bezug auf eine Fahrtrichtung F quer eingebaut werden kann, und einen Zylinderkopf 2 mit einem darin integrierten Abgaskrümmer 3 aufweist. Darüber hinaus weist der Verbrennungsmotor 1 einen Motorblock 4 auf, auf dem der Zylinderkopf 2 fixiert ist. Der Motorblock 4 weist eine Motorblock-Längsseite 5 und eine im Vergleich zur Längsseite 5 kürzere Motorblock-Stirnseite 6 auf. Da der Motorblock 4 gemäß der Darstellung der Fig. 1 unterhalb des Zylinderkopfes 2 liegt, ist er strichliert angedeutet.

Wie aus Fig. 1 ferner ersichtlich, weist der Verbrennungsmotor 1 einen Abgasturbolader 7 auf, der eine Turbine 8 mit einem Turbinengehäuse 8', ein Lagergehäuse 9 und einen Verdichter 10 mit einem Verdichtergehäuse 10' umfasst, wobei der Abgasturbolader 7 an der Stirnseite 6 des Motorblocks 4 angebracht ist. Das Turbinengehäuse 8' der Turbine 8 des Abgasturboladers 7 ist mit seinem Eintritt direkt am integrierten Abgaskrümmer 3 angeschlossen, der vom Verbrennungsmotor 1 ausgestoßenes Abgas A_{G} in das Turbinengehäuse 8' einleitet. Alternativ kann das Turbinengehäuse 8' auch vorzugsweise im Zylinderkopf integriert sein und ein ein- oder mehrflutiges Turbinengehäuse 8' darstellen.

Darüber hinaus ist das Verdichtergehäuse 10' des Verdichters 10 des Abgasturboladers 7 druckstutzenseitig mit einem Modul 11 verbunden, das an der Frischluftseite des Zylinderkopfs 2 angeflanscht ist und ein Saugrohr 12, eine Ladeluftkühlung 13 und eine Drosselklappe 14 umfassen kann. Wie aus Fig. 1 ersichtlich, wird vom Verbrennungsmotor 1 angesaugte Luft La im Verdichter 10 des Abgasturboladers 7 verdichtet und als verdichtete Luft Lv dem Saugrohr 12 des Moduls 11 zugeführt, darin mittels der Ladeluftkühlung 13 gekühlt und anschließend dem Ansaugtrakt des Verbrennungsmotors 1 über die Drosselklappe 14 zugeführt.

Das Modul 11 weist ferner vorzugsweise eine Vorrichtung zur Abgasrückführung auf, die jedoch in der schematisch vereinfachten Darstellung von Fig. 1 hier nicht dargestellt ist. Das Modul 11 kann alternativ auch vollständig oder teilweise im Zylinderkopf 2 integriert angeordnet sein.

Nachfolgend wird eine zweite Ausführungsform des erfindungsgemäßen Verbrennungsmotors 1 mit Bezug auf Fig. 2 beschrieben. Gleiche Bauteile sind hierbei mit den gleichen Bezugszeichen wie bei der oben beschriebenen ersten Ausführungsform gekennzeichnet. Im Unterschied zur ersten Ausführungsform weist die zweite, in Fig. 2 dargestellte Ausführungsform des Verbrennungsmotors 1 zusätzlich ein Wastegate 15 auf, das getrennt von der Turbine 8 außen am Zylinderkopf 2 angebracht ist und ein über das Wastegate 15 geleitetes Abgas A_{GWG} an der Turbine 8 vorbeiführt und in eine Abgasleitung einleitet.

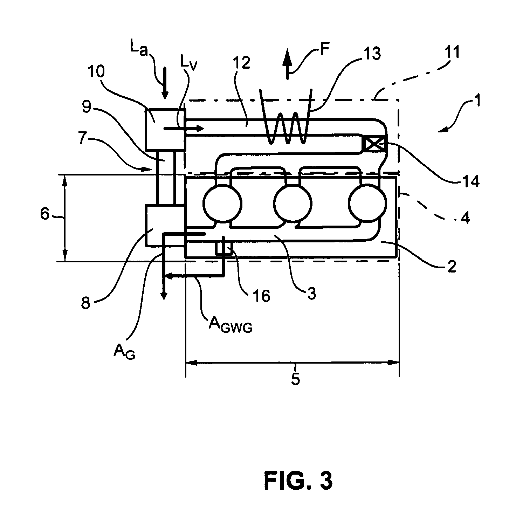

In Fig. 3 ist eine dritte Ausführungsform des erfindungsgemäßen Verbrennungsmotors 1 dargestellt. Gleiche Bauteile sind hierbei mit den gleichen Bezugszeichen wie bei der oben beschriebenen ersten Ausführungsform gekennzeichnet. Im Unterschied zur in Fig. 2 dargestellten zweiten Ausführungsform weist die dritte, in Fig. 3 dargestellte Ausführungsform des Verbrennungsmotors 1 ein Wastegate 16 auf, das getrennt von der Turbine 8 im Zylinderkopf 2 integriert ist und das Abgas A_{GWG} an der Turbine 8 vorbeiführt.

Das Turbinengehäuse 8' sowie das Verdichtergehäuse 10' des an der Stirnseite 6 des Motorblocks angebrachten Abgasturboladers 7 sind bei den oben beschriebenen Ausführungsformen des Verbrennungsmotors 1, obwohl in Fig. 1 bis 3 nicht detailliert dargestellt, vorzugsweise mit der Kühlmittel-Versorgungseinrichtung und/oder der Schmiermittel-Versorgungseinrichtung des Zylinderkopfs 2 verbunden. Hierbei wird bei einer ersten Medienführung das Kühlmittel und/oder das Schmiermittel aus den im Inneren des Zylinderkopfs 2 ausgebildeten Kanälen in Abgas-Strömungsrichtung entnommen und über eine entsprechende Flanschverbindung in das Turbinengehäuse 8' eingeleitet, wobei nicht nur eine Kühlung des Turbinengehäuses 8' der Turbine 8 erfolgt, sondern über eine Abzweigleitung optional auch das Ladergehäuse 9 gekühlt und/oder geschmiert werden kann.

Alternativ ist bei einer zweiten Medienführung auch die Zuführung des Kühlmittels und/oder Schmiermittels über eine entsprechende Flanschverbindung vom Zylinderkopf 2 in das Verdichtergehäuse 10' möglich, wobei das Kühlmedium und/oder das Schmiermittel in das Ladergehäuse 9 und das Turbinengehäuse 8' weitergeleitet werden und diese zur Kühlung und/oder Schmierung mitversorgen.

Bei einer dritten möglichen Medienführung erfolgt die Zuführung des Kühlmittels und/oder Schmiermittels über eine entsprechende Flanschverbindung vom Zylinderkopf 2 in das Ladergehäuse 9, wobei das Turbinengehäuse 8' in den Kühlmittel- und/oder Schmiermittelkreis mitintegriert ist. Darüber hinaus ist auch eine Kühlmittel- und/oder Schmiermittelzuführung vom Zylinderkopf 2 zur Verdichter-, Turbinen- oder Ladergehäuse-Seite mit einem Kreislauf im Gegenstromprinzip möglich.

Zur Ergänzung der Offenbarung wird explizit auf die zeichnerische Darstellung der Erfindung in Fig. 1 bis 3 verwiesen.

### Bezugszeichenliste

- 1: Verbrennungsmotor
- 2: Zylinderkopf
- 3: Abgaskrümmer
- 4: Motorblock
- 5: Motorblock-Längsseite
- 6: Motorblock-Stirnseite
- 7: Abgasturbolader
- 8: Turbine
- 8': Turbinengehäuse
- 9: Ladergehäuse
- 10: Verdichter
- 10': Verdichtergehäuse
- 11: Modul
- 12: Saugrohr
- 13: Ladeluftkühlung
- 14: Drosselklappe
- 15: Wastegate
- 16: Wastegate
- F: Fahrtrichtung
- A_{G}: Abgas
- A_{GWG}: über Wastegate geleitetes Abgas
- La: angesaugte Luft
- Lv: verdichtete Luft

## Patentansprüche

1. Verbrennungsmotor (1)
- mit einem Zylinderkopf (2), der mit einem integrierten Abgaskrümmer (3) versehen ist,
- mit einem Motorblock (4), auf dem der Zylinderkopf (2) fixierbar ist, der eine Motorblock-Längsseite (5) und eine im Vergleich zur Längsseite (5) kürzere Motorblock-Stirnseite (6) aufweist, und
- mit einem Abgasturbolader (7), der eine Turbine (8) mit einem Turbinengehäuse (8'), ein Ladergehäuse (9) und einen Verdichter (10) mit einem Verdichtergehäuse (10') aufweist, **dadurch gekennzeichnet,**
- **dass** der Abgasturbolader (7) an der Stirnseite (6) angeordnet ist.

2. Verbrennungsmotor (1) nach Anspruch 1, **dadurch gekennzeichnet, dass** das Turbinengehäuse (8') der Turbine (8) direkt am integrierten Abgaskrümmer (3) angebracht ist.

3. Verbrennungsmotor (1) nach Anspruch 1 oder 2, **gekennzeichnet durch** ein Modul (11), das ein Saugrohr (12), eine Ladeluftkühlung (13) und eine Drosselklappe (14) aufweist.

4. Verbrennungsmotor (1) nach Anspruch 3, **dadurch gekennzeichnet, dass** das Modul (11) ferner eine Abgasrückführung aufweist.

5. Verbrennungsmotor (1) nach Anspruch 3 oder 4, **dadurch gekennzeichnet, dass** das Modul (11) am Zylinderkopf (2) angeflanscht ist.

6. Verbrennungsmotor (1) nach Anspruch 3 oder 4, **dadurch gekennzeichnet, dass** das Modul (11) vollständig oder teilweise im Zylinderkopf (2) integriert ist.

7. Verbrennungsmotor (1) nach einem der Ansprüche 3 bis 6, **dadurch gekennzeichnet, dass** das Verdichtergehäuse (10') des Verdichters (10) druckstutzenseitig direkt an das Modul (11) angeflanscht ist.

8. Verbrennungsmotor (1) nach einem der Ansprüche 1 bis 7, **dadurch gekennzeichnet, dass** das Turbinengehäuse (8') im Zylinderkopf (2) integriert ist.

9. Verbrennungsmotor (1) nach Anspruch 8, **dadurch gekennzeichnet, dass** das Turbinengehäuse (8') ein ein- oder mehrflutiges Turbinengehäuse (8') darstellt.

10. Verbrennungsmotor (1) nach einem der Ansprüche 1 bis 9, **gekennzeichnet durch** ein Wastegate (15), das getrennt von der Turbine (8) außen am Zylinderkopf (2) angebracht ist.

11. Verbrennungsmotor (1) nach einem der Ansprüche 1 bis 9, **gekennzeichnet durch** ein Wastegate (16), das getrennt von der Turbine (8) im Zylinderkopf (2) integriert ist.

12. Verbrennungsmotor (1) nach einem der Ansprüche 1 bis 11, **dadurch gekennzeichnet, dass** das Turbinengehäuse (8') mit der Kühlmittel-Versorgungseinrichtung und/oder der Schmiermittel-Versorgungseinrichtung des Zylinderkopfs (2) verbunden ist.

13. Verbrennungsmotor (1) nach einem der Ansprüche 1 bis 12, **dadurch gekennzeichnet, dass** das Verdichtergehäuse (10') mit der Kühlmittel- und/oder der Schmiermittel-Versorgungseinrichtung des Zylinderkopfs (2) verbunden ist.

14. Verbrennungsmotor (1) nach Anspruch 12 oder 13, **dadurch gekennzeichnet, dass** das Ladergehäuse (9) über eine Abzweigleitung mit Kühlmittel und/oder Schmiermittel versorgbar ist.

15. Verbrennungsmotor (1) nach einem der Ansprüche 1 bis 13, **dadurch gekennzeichnet, dass** das Lagergehäuse (9) mit der Kühlmittel- und/oder der Schmiermittel-Versorgungseinrichtung des Zylinderkopfs (2) verbunden ist.
